# EUROPEAN PATENT APPLICATION

(11) **EP 4 787 933 A1**
(43) Date of publication of application: **05.08.2026**
(21) Application number: 23953776.4
(22) Date of filing: 28.09.2023
(51) Int. Cl.: H04W 24/08

(54) **INFORMATION SENDING, RECEIVING, AND PROCESSING METHOD AND APPARATUS, AND COMMUNICATION SYSTEM**

(71) Applicant: 1FINITY INC., Kawasaki-shi, Kanagawa 211-8588 (JP)
(72) Inventor: LI, Guorong, Beijing 100022 (CN); YI, Su, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2023/122926
(87) International publication number: WO 2025/065632

(57) **Abstract**

Embodiments of this disclosure provide information transmission, reception and processing methods and apparatuses thereof and a communication system. The method includes: triggering a delay status report; and transmitting the delay status report to a network device, the delay status report including data volume information, the data volume information including data volume related to remaining time of a service data unit in a PDCP layer (PDCP SDU) and/or data volume related to remaining time of a service data unit in an RLC layer (RLC SDU) of a terminal equipment.

## Description

### Technical Field

This disclosure relates to the field of communication technologies.

### Background

In the 3rd Generation Partnership Project (3GPP), study of enhancement of extended reality (XR) services began in Release 18. XR services refer to environments of all real and virtual combination and human-computer interaction generated by computer technologies and wearable devices. XR services may include virtual reality (VR) services, augmented reality (AR) services and mixed reality (MR) services.

For XR services with strict delay restrictions, a scheduler with delay information are beneficial to meet their quality of service (QoS). The scheduler with delay information may be implemented in downlink, because that a network side (such as a gNB) learns QoS characteristics of a user equipment (such as learning via a 5G quality of service parameter, such as a 5G QoS identifier (5QI)), and also learns when XR frames (packets) arrive, hence, it also learns a degree of urgency of scheduling buffered data.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary

It was found by the inventor that for uplink, as a current buffer status report (BSR) only provides a size of buffered data, but does not transfer information on how long the data in a user equipment (UE) has been buffered, a scheduler at a network side is unable to accurately learn a buffered time of the data in the UE, hence, it is deemed in 3GPP that reporting delay information by the UE is beneficial to XR services.

Currently, it has been agreed in 3GPP to introduce reporting of delay information. For example, the delay information may include a remaining time and its associated amount of data (or buffer status or data volume), but it has not yet clarified how to determine or calculate the amount of data with which the remaining time is associated.

In order to solve at least one of the above problems, embodiments of this disclosure provide information transmission, reception and processing methods and apparatuses thereof and a communication system.

According to one aspect of the embodiments of this disclosure, there is provided an information transmission method, applicable to a terminal equipment, wherein the method includes:
triggering a delay status report; and
transmitting the delay status report to a network device, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to another aspect of the embodiments of this disclosure, there is provided an information reception method, applicable to a network device, wherein the method includes:
receiving a delay status report transmitted by a terminal equipment, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to a further aspect of the embodiments of this disclosure, there is provided an information processing method, applicable to a terminal equipment, wherein the method includes:
triggering a delay status report;
triggering a scheduling request; and
canceling the scheduling request.

According to still another aspect of the embodiments of this disclosure, there is provided an information processing method, applicable to a terminal equipment, wherein the method includes:
triggering a delay status report; triggering a scheduling request; initiating a random access procedure related to the scheduling request; and stopping the random access procedure.

According to yet another aspect of the embodiments of this disclosure, there is provided an information processing method, applicable to a terminal equipment, wherein the method includes:
generating a MAC PDU, the MAC PDU including a delay status report (DSR) and/or a buffer status report (BSR).

According to yet still another aspect of the embodiments of this disclosure, there is provided an information transmission apparatus, applicable to a terminal equipment, wherein the apparatus includes:
a first triggering unit configured to trigger a delay status report; and
a transmitting unit configured to transmit the delay status report to a network device, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to even another aspect of the embodiments of this disclosure, there is provided an information reception apparatus, applicable to a network device, wherein the apparatus includes:
a receiving unit configured to receive a delay status report transmitted by a terminal equipment, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to even still another aspect of the embodiments of this disclosure, there is provided an information processing apparatus, applicable to a terminal equipment, wherein the apparatus includes:
a second triggering unit configured to trigger a delay status report; a third triggering unit configured to trigger a scheduling request; and a first processing unit configured to cancel the scheduling request.

According to even further aspect of the embodiments of this disclosure, there is provided an information processing apparatus, applicable to a terminal equipment, wherein the apparatus includes:
a fourth triggering unit configured to trigger a delay status report; a fifth triggering unit configured to trigger a scheduling request; a sixth triggering unit configured to initiate a random access procedure related to the scheduling request; and a second processing unit configured to stop the random access procedure.

According to even still another aspect of the embodiments of this disclosure, there is provided an information processing apparatus, applicable to a terminal equipment, wherein the apparatus includes:
a third processing unit configured to generate a MAC PDU, the MAC PDU including a delay status report (DSR) and/or a buffer status report (BSR).

According to even further still aspect of the embodiments of this disclosure, there is provided a communication system, including:
a terminal equipment configured to execute the information transmission method and/or the information processing method at a terminal equipment side; and
a network device configured to execute the information reception method at a network device side.

An advantage of the embodiments of this disclosure exists in that it is clarified how to determine data volume associated with remaining time, that is, the data volume includes data volume related to remaining time of a service data unit in a PDCP layer and/or an RLC layer of the terminal equipment, thereby solving problems in the relevant art.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of an embodiment of this disclosure;
FIG. 2 is a schematic diagram of an information transmission method of an embodiment of this disclosure;
FIG. 3 is a schematic diagram of an application scenario of the information transmission method of an embodiment of this disclosure;
FIG. 4 is a schematic diagram of an information reception method of an embodiment of this disclosure;
FIG. 5 is a schematic diagram of an information processing method of an embodiment of this disclosure;
FIG. 6 is another schematic diagram of an information processing method of an embodiment of this disclosure;
FIG. 7 is a further schematic diagram of an information processing method of an embodiment of this disclosure;
FIG. 8 is a schematic diagram of an information transmission apparatus of an embodiment of this disclosure;
FIG. 9 is a schematic diagram of an information reception apparatus of an embodiment of this disclosure;
FIG. 10 is a schematic diagram of an information processing apparatus of an embodiment of this disclosure;
FIG. 11 is another schematic diagram of an information processing apparatus of an embodiment of this disclosure;
FIG. 12 is a further schematic diagram of an information processing apparatus of an embodiment of this disclosure;
FIG. 13 is a schematic diagram of a network device of an embodiment of this disclosure; and
FIG. 14 is a schematic diagram of a terminal equipment of an embodiment of this disclosure.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G new radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, media access control (MAC) signaling, or a MAC control element (MAC CE); however, this disclosure is not limited thereto.

Scenarios in the embodiments of this disclosure shall be described below by way of examples; however, this disclosure is not limited thereto.

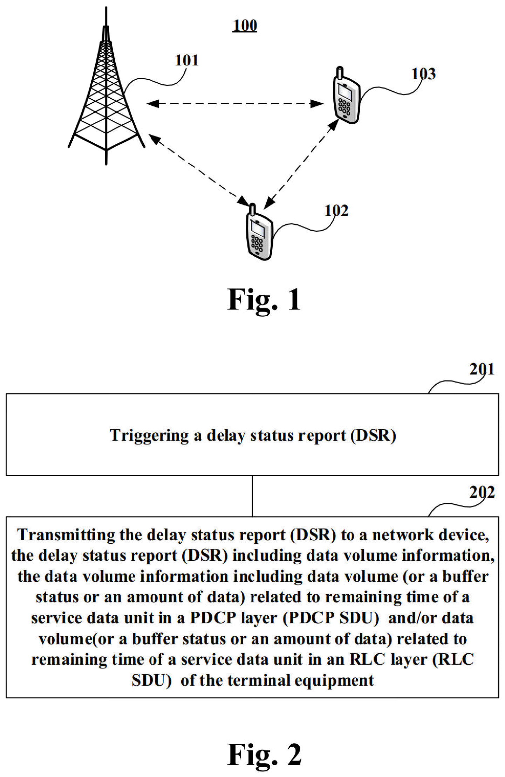

FIG. 1 is a schematic diagram of a communication system of an embodiment of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiment of this disclosure is not limited thereto.

In embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit uplink data to the network device 101, such as in a dynamic scheduled grant transmission manner or a configured grant transmission manner. The network device 101 may receive data transmitted by one or more terminal equipments 102, and transmit information for scheduling uplink new data transmission or uplink data retransmission to the terminal equipments 102, or may transmit downlink data.

The information transmission method, information reception method and information processing method and apparatuses thereof of the embodiments of this disclosure shall be described below with reference to the accompanying drawings.

### Embodiments of a first aspect

The embodiments of this disclosure provide an information transmission method, applicable to a terminal equipment side, which shall be described below with reference to the accompanying drawings.

FIG. 2 is a schematic diagram of an information transmission method of an embodiment of this disclosure. As shown in FIG. 2, the method includes:
201: triggering a delay status report (DSR); and
202: transmitting the delay status report (DSR) to a network device, the delay status report (DSR) including data volume information, the data volume information including data volume (or a buffer status or an amount of data) related to remaining time of a service data unit in a PDCP layer (PDCP SDU) and/or data volume(or a buffer status or an amount of data) related to remaining time of a service data unit in an RLC layer (RLC SDU) of the terminal equipment.

With the above embodiments, it is clarified how to determine data volume associated with remaining time, that is, the data volume includes data volume related to remaining time of a service data unit in a PDCP layer and/or an RLC layer of the terminal equipment, thereby solving the problems in the relevant art.

In some embodiments, in 201, the DSR is used to report delay information of at least one logical channel group (LCG), and any existing method may be used to trigger reporting of the DSR, such as triggering reporting of the DSR based on a threshold. For example, when remaining time of a PDU (protocol data unit) or a PDU set (protocol data unit set) is lower than a threshold, reporting of the DSR is triggered. A PDU is carried on a payload of information of a unit generated in an application layer, such as frames or video slices of XR services. A PDU set includes one or more PDUs, and the threshold may be configured by the network. For example, the network configures a threshold for triggering reporting of a DSR for each logical channel group (LCG).

In some embodiments, in 202, the UE may include at least one of data volume information in the DSR and report it to the network side. The data volume information may be used to indicate an amount of data related to the remaining time. The data volume related to the remaining time may also be expressed as a buffer size, or a buffer status, etc., and a length of the data volume information may be 5 bits or 8 bits. A value or index of data volume information corresponds to a range of data volume related to the remaining time, the data volume related to the remaining time is in unit of bits or bytes.

In some embodiments, one data volume information corresponds to a logical channel group.

In some embodiments, a UE may determine that data volume information includes data volume of a PDCP layer and/or data volume of an RLC layer. For example, the data volume of the PDCP layer includes data volume related to remaining time of a service data unit (PDCP SDU), and the data volume of the RLC layer includes data volume related to remaining time of a service data unit (RLC SDU). In this case, the method may further include (not shown in the figure):
determining data volume information contained in the DSR. Hence, the problems in the relevant art may be solved. For example, in the PDCP layer and/or the RLC layer, the determining data volume information may include at least one of the following:
data volume related to remaining time of a service data unit when a DSR is triggered; data volume related to remaining time of a service data unit when a DSR MAC CE is generated; data volume related to remaining time of a service data unit when a MAC PDU containing a DSR MAC CE is assembled (or obtained or generated); data volume related to remaining time of a service data unit when a DSR MAC CE or a MAC PDU containing the DSR MAC CE is transmitted. A specific determination method shall be described below and shall not be repeated herein any further.

In some embodiments, in 202, the DSR may be reported via any signaling. For example, a UE may define a separate MAC CE (MAC control element) for reporting the DSR; however, it is not limited thereto, and the DSR may also be carried by other existing signaling (such as RRC signaling, etc.), or may be carried by an existing MAC CE.

In some embodiments, remaining time of the service data unit may be calculated based on a value of a discard timer (discardTimer). For a PDCP layer, a UE may calculate remaining time of a PDCP SDU based on the value of the discard timer (discardTimer) associated with the service data unit of the PDCP layer (PDCP SDU). For example, when the PDCP layer of the UE receives a PDCP SDU from an upper layer (such as an RRC layer, and so on), if a discardTimer to/with which the PDCP SDU corresponds/is associated is configured, then the discardTimer is started, and the remaining time of the PDCP SDU is calculated according to the value of the discardTimer. For an RLC layer, the UE may calculate remaining time of an RLC SDU based on a value of the discardTimer associated with the service data unit of the RLC layer (RLC SDU). For example, when the RLC layer of the UE receives an RLC SDU from an upper layer (such as a PDCP layer, etc.), the upper layer may notify a value of a discardTimer to/with which the RLC SDU corresponds/is associated, and the RLC layer of the UE calculates the remaining time of the RLC SDU according to the value of the discardTimer.

When a discardTimer corresponding to/associated with a PDCP SDU expires, a PDCP entity of a UE at a transmitter side discards the PDCP SDU and a PDCP data PDU containing the PDCP SDU. If a corresponding PDCP data PDU has already been submitted to a lower layer (such as the RLC layer), it indicates the discard to the lower layer. For the RLC layer of the UE, when an upper layer (such as a PDCP) instructs to discard a specific RLC SDU, the RLC entity discards the indicated RLC SDU, if the RLC SDU or a segment thereof has not yet been submitted to a lower layer (such as a MAC layer).

In some embodiments, the discardTimer may be configured by the network side. For example, the network may configure the discardTimer on a per DRB (data radio bearer) basis of the UE, and an initial value or maximum value of the discardTimer may be configured by the network side. The initial value may be set to be an integer greater than 0 and in units of milliseconds. The value of the discardTimer when it is started is set to be the initial value configured by the network, and the value of the discardTimer after it is started decreases over time, and when it decreases to 0, it is deemed that the discardTimer expires; or, the initial value of the discardTimer is set to be 0 when it is started, increases over time after the discardTimer is started, and when it reaches a maximum value configured by the network, it is deemed that the discardTimer expires.

In some embodiments, for a PDCP layer, remaining time of its PDCP SDU is determined by the PDCP layer. For example, the PDCP layer may calculate the remaining time of the PDCP SDU based on a value of a discardTimer associated with a service data unit (PDCP SDU) of the PDCP layer. For example, when the PDCP layer of the UE receives a PDCP SDU from an upper layer (such as an RRC layer, etc.), if a discardTimer to/with which the PDCP SDU corresponds/is associated is configured, a PDCP entity of the UE at the transmitter side starts the discardTimer corresponding to/associated with the PDCP SDU, and calculates the remaining time of the PDCP SDU according to the value of the discardTimer.

For an RLC layer, remaining time of an RLC SDU may be indicated by an upper layer, such as the PDCP layer; however, it is not limited thereto, and it may also be indicated by other upper layers. For example, the RLC layer may calculate the remaining time of the RLC SDU based on the value of the discard timer with which the service data unit of the RLC layer (RLC SDU) is associated, and the PDCP layer indicates the remaining time to the RLC layer. For example, when the RLC layer receives an RLC SDU from the upper layer (e.g. the PDCP layer, etc.), it receives the value of the discardTimer corresponding to/associated with the RLC SDU from the upper layer (e.g. the PDCP layer), and calculates the remaining time of the RLC SDU according to the value of the discardTimer.

In some embodiments, data volume related to remaining time of a service data unit includes data volume of the service data unit when the remaining time of the service data unit satisfies a preset condition. The preset condition may include that: the remaining time of the service data unit is less than or equal to a first threshold; or the remaining time of the service data unit is greater than or equal to a first threshold; or the remaining time of the service data unit is between the first threshold and a second threshold. For example, the data volume related to the remaining time of the service data unit includes data volume of the service data unit when the remaining time of the service data unit is less than or equal to the first threshold, or includes data volume of the service data unit when the remaining time of the service data unit is greater than or equal to the second threshold, or includes data volume of the service data unit when the remaining time of the service data unit is between the first threshold and the second threshold.

For example, for a PDCP layer, data volume related to remaining time of a service data unit may include: data volume of a PDCP SDU when the remaining time of the PDCP SDU satisfies a first preset condition.

In some embodiments, the first preset condition may include that: the remaining time of the PDCP SDU is less than or equal to a first threshold (a PDCP SDU for which the remaining discardTimer value is less than or equal to a first threshold), such as for cases where the PDCP discardTimer decreases over time after being started.

In some embodiments, the first preset condition may include that: the remaining time of the PDCP SDU is higher than or equal to a first threshold (a PDCP SDU for which the remaining discardTimer value is higher than or equal to a first threshold), such as for cases where the PDCP discardTimer increases over time after being started.

In some embodiments, the first preset condition may include that: the remaining time of the PDCP SDU may be within a range, such as between a first threshold and a second threshold. For example, when the first threshold is greater than the second threshold, the remaining time of the PDCP SDU may be less than or equal to a first threshold and higher than or equal to a second threshold (a PDCP SDU for which the remaining discardTimer value is less than a first threshold and higher than or equal to a second threshold), and vice versa.

For example, for an RLC layer, data volume related to remaining time of a service data unit may include: data volume of an RLC SDU when the remaining time of the RLC SDU satisfies a second preset condition.

In some embodiments, the second preset condition may include that: the remaining time of the RLC SDU is less than or equal to a first threshold (an RLC SDU for which the remaining discardTimer value is less than or equal to a first threshold), such as for cases where the RLC discardTimer decreases over time after being started.

In some embodiments, the second preset condition may include that: the remaining time of the RLC SDU is higher than or equal to a first threshold (an RLC SDU for which the remaining discardTimer value is higher than or equal to a first threshold), such as for cases where the RLC discardTimer increases over time after being started.

In some embodiments, the second preset condition may include that: the remaining time of the RLC SDU may be within a range, such as between a first threshold and a second threshold. For example, when the first threshold is greater than the second threshold, the remaining time of the RLC SDU may be less than or equal to a first threshold and higher than or equal to a second threshold (an RLC SDU for which the remaining discardTimer value is less than a first threshold and higher than or equal to a second threshold), and vice versa.

In some embodiments, the preset condition may be set according to an actual situation. The preset condition for the PDCP layer may be identical to or different from the preset condition for the RLC layer (i.e. the first preset condition and the second preset condition), which shall not be repeated herein any further.

In some embodiments, the first threshold and/or the second threshold is/are predefined or is/are configured by the network. The second threshold may be a lower limit of a value range to which an index of remaining time of a service data unit corresponds, and the first threshold may be predefined or configured according to a time when data volume related to the remaining time of the service data unit is determined, such as when a DSR is triggered, a DSR MAC CE is generated, a DSR MAC PDU is assembled, or the DSR MAC CE is transmitted. Following description shall be given with reference to the accompanying drawings by taking specific application scenarios, and examples below are applicable to a PDCP layer and/or an RLC layer.

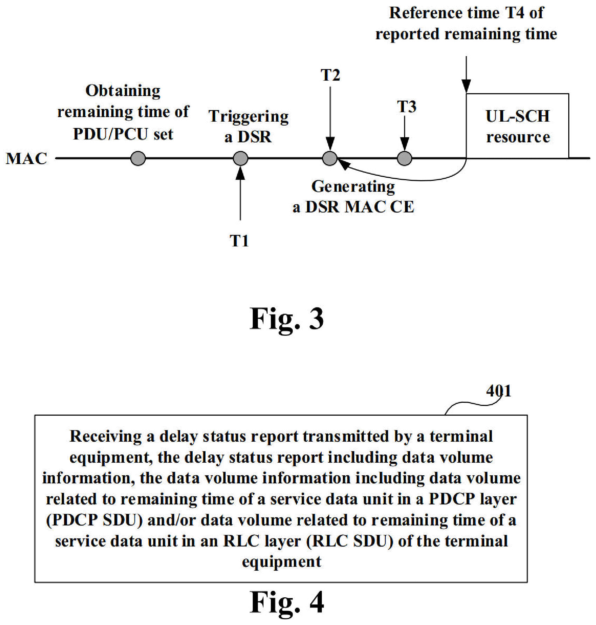

FIG. 3 is a schematic diagram of an application scenario of an information transmission method of an embodiment of this disclosure, showing a process of triggering a DSR and generating and reporting a MAC CE. As shown in FIG. 3, a UE obtains remaining time of a PDU (protocol data unit) or a PDU set (protocol data unit set) (get remaining time of a PDU or a PDU set). For example, the remaining time may be determined according to a value of a PDCP discardTimer, and a reference time T4 of the remaining time is calculated as a time when the UE transmits a first symbol on a UL-SCH (uplink shared channel) or PUSCH (physical uplink shared channel) resource and/or a time satisfying other conditions. At a time T1, the remaining time of the PDU or PDU set is lower than a threshold, and the DSR is triggered (trigger a DSR); at a time T2, a DSR MAC CE is generated and data volume information (such as remaining time and/or data volume related to the remaining time) is reported via the generated DSR MAC CE; at a time T3, a MAC PDU containing the DSR MAC CE is assembled, and T3 may be identical to or slightly later than T2; and at a time T4, the DSR MAC CE or the MAC PDU containing the DSR MAC CE is transmitted in a UL-SCH or PUSCH resource.

Determining data volume related to remaining time of a service data unit (PDCP SDU and/or RLC SDU) shall be described below with reference to FIG.3.

Example 1: as shown in FIG. 3, data volume related to remaining time of the service data unit includes: data volume related to the remaining time of the service data unit when the delay status report (DSR) is triggered (such as at time T1).

In this case, the first threshold may be a threshold for triggering a DSR by a logical channel group (LCG) configured by the network. The network respectively configures a threshold for triggering a DSR for at least one logical channel group (LCG), each LCG including at least one logical channel. A logical channel includes data of a PDCP SDU and/or an RLC SDU, that is, it includes data of a PDU (carrying a payload of an information unit of an application layer) or a PDU set, and a threshold for triggering a DSR of the MAC layer is a DSR threshold of the logical channel group where the PDU or PDU set is located. Thus, the first threshold is a threshold (remaining time threshold) for triggering a DSR configured by the network for the logical channel group (LCG) of the logical channel to which the service data unit corresponds belongs.

Example 2: as shown in FIG. 3, data volume related to remaining time of the service data unit includes data volume related to the remaining time of the service data unit when a delay status report (DSR) MAC CE is generated.

In this case, the first threshold is a value of the remaining time of the service data unit when the DSR MAC CE is generated (such as at time T2), or the first threshold is a difference between the threshold (remaining time threshold) for triggering the DSR by the logical channel group (LCG) configured by the network and a difference between a time when the DSR is triggered and a time when the DSR MAC CE is generated (such as T2-T1), i.e. a value obtained by subtracting the difference between the time when the DSR is triggered and the time when the DSR MAC CE is generated from the threshold (remaining time threshold) for triggering the DSR by the logical channel group (LCG) configured by the network.

In some embodiments, the method may further include (not shown in the figure):
for a PDCP layer, notifying the PDCP layer by a MAC layer of a time when a DSR MAC CE is generated, and/or, a difference between a time when a DSR is triggered and a time when the DSR MAC CE is generated; and/or
for an RLC layer, notifying the RLC layer by a MAC layer and/or a PDCP layer of a time when a DSR MAC CE is generated, and/or, a difference between a time when a DSR is triggered and a time when the DSR MAC CE is generated.

In the above embodiments, the time when the DSR MAC CE is generated may be an absolute time, and may be a system frame number (SFN) and/or a slot number and/or a symbol number.

Example 3: data volume related to remaining time of the service data unit includes: data volume related to the remaining time of the service data unit when a MAC PDU including a delay status report (DSR) MAC CE is assembled (or obtained or generated).

In this case, the first threshold is a value of the remaining time of the service data unit when the MAC PDU including the DSR MAC CE is assembled (such as time T3), or the first threshold is a difference between a threshold (remaining time threshold) for triggering the DSR by each logical channel group (LCG) configured by the network and a difference between a time when the DSR is triggered and a time when the MAC PDU including DSR MAC CE is assembled (such as T3-T1), i.e. a value obtained by subtracting the difference between the time when the DSR is triggered and the time when the MAC PDU including DSR MAC CE is assembled from the remaining time threshold for triggering the DSR by each logical channel group (LCG) configured by the network.

In some embodiments, the method may further include (not shown in the figure):
for a PDCP layer, notifying the PDCP layer by a MAC layer of a time when a MAC PDU including a DSR MAC CE is assembled, and/or a difference between a time when a DSR is triggered and a time when the MAC PDU including the DSR MAC CE is assembled; and/or
for an RLC layer, notifying the RLC layer by a MAC layer and/or a PDCP layer of a time when a MAC PDU including a DSR MAC CE is assembled, and/or a difference between a time when a DSR is triggered and a time when the MAC PDU including the DSR MAC CE is assembled.

In the above embodiments, the time when the MAC PDU including the DSR MAC CE is assembled may be an absolute time, or may also be a system frame number (SFN) and/or a slot number and/or a symbol number.

Example 4: as shown in FIG. 3, data volume related to remaining time of the service data unit includes: data volume related to remaining time of the service data unit when the DSR MAC CE is transmitted, or data volume related to remaining time of the service data unit when the DSR MAC CE is reported, or data volume related to remaining time of the service data unit when a first symbol is transmitted in a PUSCH where the DSR MAC CE is transmitted.

In this case, the first threshold is a value of the remaining time of the service data unit when the DSR MAC CE is transmitted (such as T4 time), or a value of the remaining time of the service data unit when the DSR MAC CE is reported, or, a value of the remaining time of the service data unit when the first symbol is transmitted in the PUSCH where the DSR MAC CE is transmitted, or a difference between a threshold for triggering the DSR by the logical channel group configured by the network and a difference between a time when the DSR is triggered and a time when the DSR MAC CE is transmitted (such as T4-T1) (i.e. a value obtained by subtracting the difference between the time when the DSR is triggered and the time when the DSR MAC CE is transmitted from the threshold for triggering the DSR by the logical channel group configured by the network), or, a difference between a threshold for triggering the DSR by the logical channel group configured by the network and a difference between the time when the DSR is triggered and the time when the DSR MAC CE is transmitted (i.e. a value obtained by subtracting the difference between the time when the DSR is triggered and the time when the DSR MAC CE is reported from the threshold for triggering the DSR by the logical channel group configured by the network), or a difference between the threshold for triggering the DSR by the logical channel group configured by the network and a difference between the time when the DSR is triggered and a time when the first symbol is transmitted in a PUSCH where the DSR MAC CE is transmitted (i.e. a value obtained by subtracting the difference between the time when the DSR is triggered and the time when the first symbol is transmitted in the PUSCH where the DSR MAC CE is transmitted from the threshold for triggering the DSR by the logical channel group configured by the network).

In some embodiments, the method further includes (not shown in the figure): for a PDCP layer, notifying the PDCP layer by a MAC layer of at least one of the following information:
a time when a DSR MAC CE is transmitted, or a time when the DSR MAC CE is reported, or a time when a first symbol is transmitted in a PUSCH where the DSR MAC CE is transmitted, or a difference between a time when a DSR is triggered and a time when the DSR MAC CE is transmitted, or a difference between a time when the DSR is triggered and a time when the DSR MAC CE is reported, or a difference between a time when the DSR is triggered and a time when a first symbol is transmitted in the PUSCH where the DSR MAC CE is transmitted; and/or
for an RLC layer, notifying the RLC layer by a MAC layer and/or a PDCP layer of at least one of the following information:
   a time when a DSR MAC CE is transmitted, or a time when the DSR MAC CE is reported, or a time when a first symbol is transmitted in a PUSCH where the DSR MAC CE is transmitted, or a difference between a time when a DSR is triggered and a time when the DSR MAC CE is transmitted, or a difference between a time when the DSR is triggered and a time when the DSR MAC CE is reported, or a difference between a time when the DSR is triggered and a time when the DSR MAC CE is reported, or a difference between a time when the DSR is triggered and a time when a first symbol is transmitted in the PUSCH where the DSR MAC CE is transmitted.

In the above embodiments, the time when the DSR MAC CE is transmitted or when the DSR MAC CE is reported or when the first symbol is transmitted in the PUSCH where the DSR MAC CE is transmitted may be an absolute time, or may be a system frame number (SFN) and/or a slot number and/or a symbol number.

In examples 1-4 above, the absolute time may be, for example, a Global Positioning System (GPS) time, or a coordinated universal time (UTC, or TUC in French), etc., which is not limited in this disclosure.

According to the above embodiments, the data volume associated with the remaining time may be determined, and the data volume includes the data volume related to the remaining time of the service data unit of the PDCP layer and/or RLC layer of the terminal equipment, thereby solving the problems in the relevant art.

In some embodiments, the first threshold may be multiple, and the number of determined data volume information may also be one or more, which shall not be repeated herein any further.

In some embodiments, for a PDCP layer and an RLC layer, values of the first threshold and/or the second threshold may be identical or different.

In some embodiments, data volume related to remaining time indicated by data volume information included in a DSR MAC CE of a MAC layer includes data volume ( buffer status or amount of data) on all logical channels of a logical channel group, and the data volume related to the remaining time may be at least one of the following:
(1) data volume on all logical channels in a logical channel group when a delay status report (DSR) is triggered;
(2) data volume on all logical channels in the logical channel group when or after a DSR MAC CE is generated;
(3) data volume on all logical channels in the logical channel group when or after a DSR MAC PDU is assembled (or obtained or generated);
(4) data volume on all logical channels in the logical channel group when the DSR MAC CE is transmitted;
(5) data volume on all logical channels in the logical channel group when the DSR MAC CE is reported; or
(6) data volume on all logical channels in the logical channel group when the first symbol is transmitted in the PUSCH where the DSR MAC CE is transmitted.

In some embodiments, data volume on each logical channel of a logical channel group includes: data volume related to remaining time of a service data unit in a PDCP layer (PDCP SDU) of a terminal equipment described above, and/or data volume related to remaining time of a service data unit in an RLC layer (RLC SDU) described above.

For (1), when the DSR is triggered, the data volume on each logical channel in the logical channel group includes: at a transmitting PDCP entity to which the logical channel corresponds, the data volume related to the remaining time of the service data unit in the PDCP layer (PDCP SDU) when the DSR is triggered described above, and/or, at a transmitting RLC entity to which the logical channel corresponds, the data volume related to the remaining time of the service data unit in the RLC layer (RLC SDU) when the DSR is triggered described above.

For (2), when or after the DSR MAC CE is generated, the data volume on each logical channel in the logical channel group includes: at the transmitting PDCP entity to which the logical channel corresponds, data volume related to the remaining time of the service data unit in the PDCP layer (PDCP SDU) when the DSR MAC CE is generated, and/or, at the transmitting RLC entity to which the logical channel corresponds, data volume related to the remaining time of the service data unit in the RLC layer (RLC SDU) when the DSR MAC CE is generated.

For (3), when or after the MAC PDU including the DSR MAC CE is assembled, the data volume on each logical channel in the logical channel group includes: at a transmitting PDCP entity to which the logical channel corresponds, the data volume related to the remaining time of the service data unit in the PDCP layer (PDCP SDU) when the MAC PDU including the DSR MAC CE is assembled, and/or, at a transmitting RLC entity to which the logical channel corresponds, the data volume related to the remaining time of the service data unit in the RLC layer (RLC SDU) when the MAC PDU including the DSR MAC CE is assembled.

For (4), when the DSR MAC CE is transmitted, the data volume on each logical channel in the logical channel group includes: at the transmitting PDCP entity to which the logical channel corresponds, data volume related to the remaining time of the service data unit in the PDCP layer (PDCP SDU) when the DSR MAC CE is transmitted, and/or, at the transmitting RLC entity to which the logical channel corresponds, data volume related to the remaining time of the service data unit in the RLC layer (RLC SDU) when the DSR MAC CE is transmitted.

For (5), when the DSR MAC CE is reported, the data volume on each logical channel in the logical channel group includes: at a transmitting PDCP entity to which the logical channel corresponds, the data volume related to the remaining time of the service data unit in the PDCP layer (PDCP SDU) when the DSR MAC CE is reported, and/or, at a transmitting RLC entity to which the logical channel corresponds, the data volume related to the remaining time of the service data unit in the RLC layer (RLC SDU) when the DSR MAC CE is reported.

For (6), when the first symbol is transmitted in the PUSCH where the DSR MAC CE is transmitted, the data volume on each logical channel in the logical channel group includes: at the transmitting PDCP entity to which the logical channel corresponds, data volume related to the remaining time of the service data unit in the PDCP layer (PDCP SDU) when the first symbol is transmitted in the PUSCH where the DSR MAC CE is transmitted, and/or, at the transmitting RLC entity to which the logical channel corresponds, data volume related to the remaining time of the service data unit in the RLC layer (RLC SDU) when the first symbol is transmitted in the PUSCH where the DSR MAC CE is transmitted.

In some embodiments, for an RLC layer, when determining data volume related to remaining time of an RLC SDU, the following contents may further be included:
when data discarded by an upper layer (such as data discarded when a discardTimer expires) is not yet included in an RLC data PDU, data volume related to the remaining time of the service data unit in the RLC layer does not include the data discarded by the upper layer; and/or
when the data discarded by the upper layer is already included in the RLC data PDU pending for initial transmission, data volume related to the remaining time of the service data unit in the RLC layer includes the data discarded by the upper layer; and/or
when the data discarded by the upper layer is already included in the RLC data PDU pending for retransmission, data volume related to the remaining time of the service data unit in the RLC layer includes the data discarded by the upper layer.

The upper layer may be, for example, a PDCP layer.

In some embodiments, data discarded by an upper layer has already been submitted to an RLC layer, and when the upper layer discards the data due to expiration of a discardTimer, the upper layer indicates discarded RLC SDU to the RLC layer. At this time, following processing may be performed at the RLC layer:
for example, if the RLC SDU or a segment of the RLC SDU indicated by the upper layer to be discarded has not been included in an RLC data PDU or has not been submitted to a MAC layer and/or a physical layer, the RLC SDU or the segment of the RLC SDU are not included in data volume related to the remaining time of the service data unit in the RLC layer;
for example, if the RLC SDU or a segment of the RLC SDU indicated by the upper layer to be discarded has already been included in an RLC data PDU pending for initial transmission, or has already been included in an RLC data PDU pending for retransmission, or has already been submitted to a MAC layer and/or a physical layer, or has already been included in a MAC PDU, or has already been initially transmitted or retransmitted by the MAC layer and/or a physical layer, the RLC SDU or the segment of the RLC SDU are included in data volume related to the remaining time of the service data unit in the RLC layer.

According to the above embodiments, the data volume related to the remaining time of the service data unit may be more accurately determined, which solves the problems in the relevant art. In addition, the determined data volume may be included in the DSR to be reported to the network device, which is helpful to the network device to allocate uplink resources of appropriate sizes for transmission of uplink services of the terminal equipment, thereby avoiding that uplink resources are unable to satisfy latency requirements due to insufficient allocation of uplink resources or avoiding waste of radio resources due to excessive allocation of uplink resources.

### Embodiments of a second aspect

The embodiments of this disclosure provide an information reception method, applicable to a network side and corresponding to the embodiments of the first aspect. Contents in the embodiments different from those in the embodiments of the first aspect shall be described in detail, and reference may be made to the embodiments of the first aspect for contents in the embodiments identical to those in the embodiments of the first aspect, which shall not be repeated herein any further.

FIG. 4 is a schematic diagram of an information reception method of an embodiment of this disclosure, applicable to a network device. As shown in FIG. 4, the method includes:
401: receiving a delay status report transmitted by a terminal equipment, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to the above embodiment, the network device receives the delay status report transmitted by the terminal equipment, and may obtain the data volume information contained in the DSR, i.e. the data volume related to the remaining time of the service data unit in the PDCP layer (PDCP SDU) and/or the data volume related to the remaining time of the service data unit in the RLC layer (RLC SDU), so that the network device may learn accurate urgency of buffered data.

In some embodiments, data volume related to remaining time of a service data unit of a PDCP layer (PDCP SDU) and/or data volume related to remaining time of a service data unit in an RLC layer (RLC SDU) of a terminal equipment is/are as described in the embodiments of the first aspect, and shall not be repeated herein any further.

In some embodiments, data volume information included in a DSR MAC CE of a MAC layer may further include at least one of the following information:
(1) data volume on all logical channels in a logical channel group when a delay status report is triggered;
(2) data volume on all logical channels in the logical channel group when or after a DSR MAC CE is generated;
(3) data volume on all logical channels in the logical channel group when or after a DSR MAC PDU is assembled (or obtained or generated);
(4) data volume on all logical channels in the logical channel group when the DSR MAC CE is transmitted; or
(5) data volume on all logical channels in the logical channel group when a first symbol is transmitted in a PUSCH where a DSR MAC CE is transmitted.

The above data volume information is as described in the embodiments of the first aspect, the contents of which being incorporated herein, which shall not be repeated herein any further.

In some embodiments, for an RLC layer, data volume related to remaining time of an RLC SDU may further include:
when data discarded by an upper layer (such as data discarded due to expiration of a discardTimer) are not yet included in an RLC data PDU, the data volume related to the remaining time of the service data unit in the RLC layer does not include the data discarded by the upper layer; and/or
when data discarded by an upper layer are already included in an RLC data PDU pending for initial transmission or retransmission, the data volume related to the remaining time of the service data unit in the RLC layer includes the data discarded by the upper layer.

In some embodiments, the method further includes (not shown in the figure): configuring a first threshold and/or a second threshold for the terminal equipment, and notifying the terminal equipment of a determined threshold. The first threshold and the second threshold are as described in the embodiments of first aspect, and shall not be repeated herein any further.

According to the above embodiments, the network device receives the delay status report transmitted by the terminal equipment, and may obtain the data volume information contained in the DSR, i.e. the data volume related to the remaining time of the service data unit in the PDCP layer (PDCP SDU) and/or the data volume related to the remaining time of the service data unit in the RLC layer (RLC SDU), so that the network device may learn accurate urgency of buffered data, and allocate appropriate uplink resources to transmit data with urgent delay, so as to ensure delay requirements of the services.

### Embodiments of a third aspect

Currently, it has been agreed in 3GPP to define a separate MAC CE for reporting a delay status report (DSR). It was found by the inventor that under specific conditions, the triggered DSR may trigger a scheduling request (SR); however, it is still unclear under what situations the SR is cancelled.

In order to solve the above problem, this disclosure provides an information processing method, applicable to a terminal equipment.

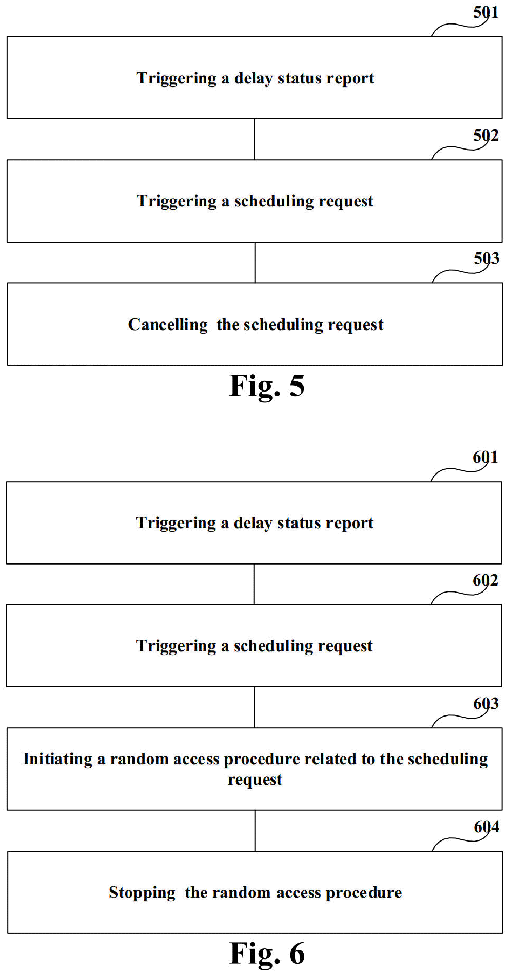

FIG. 5 is a schematic diagram of an information processing method of an embodiment of this disclosure. As shown in FIG. 5, the information processing method includes:
501: triggering a delay status report (DSR);
502: triggering a scheduling request (SR); and
503: canceling the scheduling request.

In some embodiments, the delay status report (DSR) triggered in 501 may be identical to or different from the delay status report (DSR) triggered in the embodiments of the first aspect of this disclosure, and this disclosure is not limited thereto.

In some embodiments, in 502, a process of triggering the scheduling request may include that the terminal equipment does not have available uplink resources to transmit the triggered DSR, or available uplink resources are unable to accommodate a DSR MAC CE plus its subheaders, or the available uplink resources are later than latency requirements of uplink services, etc. The terminal equipment may trigger a scheduling request, and transmit the scheduling request to the network device in a PUCCH, requesting the network device to transmit an UL grant to allocate uplink resources, so that the terminal equipment reports the delay status report via the uplink resources indicated by the UL grant.

In some embodiments, in 503, the scheduling request is canceled in at least one of the following situations where:
(1) a MAC PDU is transmitted and includes a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
(2) a UL grant is able to accommodate all pending data to be transmitted;
(3) all triggered delay status reports are cancelled; or
(4) a delay status report triggering the scheduling request is cancelled.

In some embodiments, the event triggering a DSR in (1) triggers the DSR based on, for example, a threshold, and details are as described in the embodiments of the first aspect, which shall not be repeated herein any further; or, the event may also be other events triggering the DSR. The data volume of the event triggering the DSR may be the data volume described in the embodiments of the first aspect of this disclosure, or, it may be other amounts of data, which are not limited in this disclosure.

In the above embodiments, modes for canceling the scheduling request triggered by the DSR in situations (1) to (4) may be described as follows:

| |
|---|
| All pending SR(s) for DSR triggered according to the DSR procedure prior to the MAC PDU assembly shall be cancelled and each respective *sr-ProhibitTimer* shall be stopped when the MAC PDU is transmitted and this PDU includes a DSR MAC CE which contains buffer status and/or remaining time up to (and including) the last event that triggered a DSR prior to the MAC PDU assembly. |
| All pending SR(s) for DSR triggered according to the DSR procedure shall be cancelled and each respective *sr-ProhibitTimer* shall be stopped when the UL grant(s) can accommodate all pending data available for transmission. |
| If this SR was triggered by DSR and all the triggered DSR(s) are cancelled, cancel the pending SR and stop the corresponding *sr-ProhibitTimer.* |
| If this SR was triggered by DSR and the triggered DSR that triggers the SR is cancelled, cancel the pending SR and stop the corresponding *sr-ProhibitTimer.* |

According to the above embodiments, it is clarified when the scheduling request (SR) triggered by the delay status report (DSR) is cancelled, which may reduce unnecessary transmission of SRs, save resources occupied by transmission of SRs, and lower power consumption of UEs, thereby solving the problems in the relevant art.

### Embodiments of a fourth aspect

Currently, it has been agreed in 3GPP to define a separate MAC CE for reporting a delay status report (DSR). It was found by the inventor that under specific conditions, the triggered DSR may trigger a scheduling request (SR). If no valid resources are configured for the SR, a UE will initiate a random access procedure and cancel the SR; however, it is still unclear under what situations the random access procedure will be canceled.

In order to solve the above problem, this disclosure provides an information processing method, applicable to a terminal equipment.

FIG. 6 is a schematic diagram of an information processing method of an embodiment of this disclosure. As shown in FIG. 6, the method includes:
601: triggering a delay status report (DSR);
602: triggering a scheduling request (SR);
603: initiating a random access procedure related to the scheduling request; and
604: stopping the random access procedure.

In some embodiments, the delay status report (DSR) triggered in 601 may be identical to or different from the delay status report (DSR) triggered in the embodiments of the first aspect of this disclosure, and this disclosure is not limited thereto.

In some embodiments, in 602, reference may be made to the embodiments of the third aspect for a process of triggering the scheduling request, which shall not be repeated herein any further.

In some embodiments, in 603, the random access procedure related to the scheduling request may be implemented in an existing method for initiating a random access procedure, such as the random access procedure in TSs 38.321, as described below:
As long as at least one SR is pending, the MAC entity shall for each pending SR:
1> if the MAC entity has no valid PUCCH resource configured for the pending SR:
2> initiate a random access procedure (see clause 5.1) on the SpCell and cancel the pending SR.

In some embodiments, in 604, the random access procedure is stopped in at least one of the following situations where:
(1) a MAC PDU is transmitted and includes a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
(2) a UL grant is able to accommodate all pending data to be transmitted;
(3) all triggered delay status reports are cancelled; or
(4) a delay status report triggering the scheduling request is cancelled.

In some embodiments, the event triggering a DSR in (1) triggers the DSR based on, for example, a threshold, and details are as described in the embodiments of the first aspect, which shall not be repeated herein any further; or, the event may also be other events triggering the DSR. The data volume of the event triggering the DSR may be the data volume described in the embodiments of the first aspect of this disclosure, or, it may be other amounts of data, which are not limited in this disclosure.

In the above embodiments, modes for stopping the random access procedure related to the scheduling request in situations (1) to (4) may be described as follows:

| | |
|---|---|
| The MAC entity may stop, if any, ongoing Random Access procedure due to a pending SR for DSR, which was initiated by the MAC entity prior to the MAC PDU assembly and which has no valid PUCCH resources configured, if: | |
| | - a MAC PDU is transmitted using a UL grant other than a UL grant provided by Random Access Response or a UL grant determined as specified in clause 5.1.2a for the transmission of the MSGA payload, and this PDU includes a DSR MAC CE which contains buffer status up to (and including) the last event that triggered a DSR prior to the MAC PDU assembly; or |
| | - the UL grant(s) can accommodate all pending data available for transmission; or |
| | - the DSR(s) that trigger the pending SR is cancelled; or |
| | - all the triggered DSR(s) are cancelled. |

According to the above embodiments, it is clarified when the random access procedure related to the scheduling request (SR) triggered by the delay status report (DSR) is stopped, which may reduce unnecessary transmission of messages related to random access, save radio resources, and lower power consumption of UEs, thereby solving the problems in the relevant art.

### Embodiments of a fifth aspect

Currently, both a buffer status report (BSR) and a data status report (DSR) include data volumes, i.e. amounts of data or buffer sizes. It was found by the inventor that it is currently unclear whether the BSR and DSR may be included in the same MAC PDU.

In order to solve the above problem, this disclosure provides an information processing method, applicable to a terminal equipment.

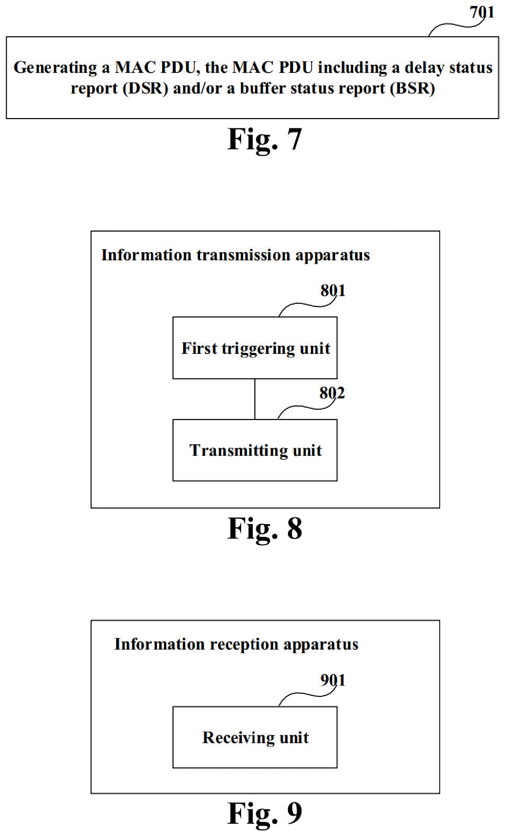

FIG. 7 is a schematic diagram of an information processing method of an embodiment of this disclosure. As shown in FIG. 7, the method includes:
701: generating a MAC PDU,
the MAC PDU including a delay status report (DSR) and/or a buffer status report (BSR).

In some embodiments, in 701, the triggered delay status report (DSR) may be identical to or different from the triggered delay status report (DSR) in the embodiments of the first aspect of this disclosure, and this disclosure is not limited thereto.

In some embodiments, the DSR and BSR are not included in the same MAC PDU, and at this case, the MAC PDU includes one of a delay status report (DSR) and a buffer status report (BSR).

In some embodiments, when both a delay status report (DSR) and a buffer status report (BSR) are triggered, whether the MAC PDU includes a DSR or a BSR is determined according to a priority of the DSR and a priority of the BSR, such as including the DSR or the BSR whichever having a higher priority in the MAC PDU. The priority of the DSR and the priority of the BSR may be configured or defined in advance. For example, in a case where the priority of the DSR and the priority of the BSR are predefined, the priority of the delay status report (DSR) is higher than that of a regular BSR or a periodic BSR or a padding BSR; or, the priority of the delay status report (DSR) is lower than that of a regular BSR and higher than that of a periodic BSR or padding BSR. For another example, when the priority of the DSR and the priority of the BSR are configured by the network device, network signaling may indicate the priority of the DSR and the priority of the BSR, or indicate that the priority of the DSR is higher than the priority of the BSR, or indicate that the priority of the BSR is higher than the priority of the DSR, in an RRC message, and so on.

Thus, repeated reporting of data volume information (buffer size or amount of data) may be reduced, and utilization of radio resources may be improved.

In some embodiments, the DSR and the BSR may be included in the same MAC PDU. At this case, the MAC PDU may simultaneously include the delay status report (DSR) and the buffer status report (BSR).

For example, when both the delay status report (DSR) and the buffer status report (BSR) are triggered, the DSR and the BSR are included in the same MAC PDU.

Thus, a process of BSR and a process of DSR may be performed independently without affecting each other, thereby making implementations simple.

### Embodiments of a sixth aspect

The embodiments of this disclosure provide an information transmission apparatus, applicable to a terminal equipment. FIG. 8 is a schematic diagram of an information reception apparatus. The information reception apparatus is created based on the same inventive concept as the information reception method in the embodiments of the first aspect of this disclosure, and their principles of solving problems are similar, hence, reference may be made to the implementation of the information reception method in the embodiments of the first aspect of this disclosure for implementation of the information reception apparatus, with repeated parts being not going to be described herein any further. The term "unit" or "module" used below refers to a combination of software and/or hardware that may achieve predetermined functions. Although the system described in the following embodiment is preferably implemented by software, implementation by hardware or a combination of software and hardware is also possible and envisioned.

As shown in FIG. 8, the information reception apparatus includes:
a first triggering unit 801 configured to trigger a delay status report; and
a transmitting unit 802 configured to transmit the delay status report to a network device, the delay status report comprising data volume information, the data volume information including data volume related to remaining time of a service data unit in a PDCP layer (PDCP SDU) and/or data volume related to remaining time of a service data unit in an RLC layer (RLC SDU) of a terminal equipment.

According to the above embodiments, it is clarified how to determine the data volume related to the remaining time, that is, the data volume includes the data volume related to the remaining time in the PDCP layer and/or the RLC layer of the terminal equipment, thereby solving problems in the relevant art.

In some embodiments, a mode for triggering a delay status report by the terminal equipment is as described in the embodiments of the first aspect, which shall not be repeated herein any further.

In some embodiments, data volume related to remaining time of a service data unit in a PDCP layer (PDCP SDU) and/or data volume related to remaining time of a service data unit in an RLC layer (RLC SDU) of the terminal equipment are as described in the embodiments of the first aspect, which shall not be repeated herein any further.

In some embodiments, for a PDCP layer, a MAC layer notifies the PDCP layer of at least one of the following information:
a time when a DSR MAC CE is transmitted, or a time when the DSR MAC CE is reported, or a time when a first symbol is transmitted in a PUSCH where the DSR MAC CE is transmitted, or a difference between a time when a DSR is triggered and a time when the DSR MAC CE is transmitted, or a difference between a time when the DSR is triggered and a time when the DSR MAC CE is reported, or a difference between a time when the DSR is triggered and a time when a first symbol is transmitted in the PUSCH where the DSR MAC CE is transmitted; and/or
for an RLC layer, notifying the RLC layer by a MAC layer and/or PDCP layer of at least one of the following information:
   a time when a DSR MAC CE is transmitted, or a time when the DSR MAC CE is reported, or a time when a first symbol is transmitted in a PUSCH where the DSR MAC CE is transmitted, or a difference between a time when a DSR is triggered and a time when the DSR MAC CE is transmitted, or a difference between a time when the DSR is triggered and a time when the DSR MAC CE is reported, or a difference between a time when the DSR is triggered and a time when the DSR MAC CE is reported, or a difference between a time when the DSR is triggered and a time when a first symbol is transmitted in the PUSCH where the DSR MAC CE is transmitted.

In the above embodiments, the time when the DSR MAC CE is transmitted or when the DSR MAC CE is reported or when the first symbol is transmitted in the PUSCH where the DSR MAC CE is transmitted may be an absolute time, or may be a system frame number (SFN) and/or a slot number and/or a symbol number.

In some embodiments, data volume related to remaining time indicated by data volume information included in a DSR MAC CE of a MAC layer includes data volume (buffer status or amount of data) on all logical channels of a logical channel group, and the data volume related to the remaining time may be at least one of the following:
data volume on all logical channels in a logical channel group when a delay status report is triggered;
data volume on all logical channels in the logical channel group when or after a DSR MAC CE is generated;
data volume on all logical channels in the logical channel group when or after a DSR MAC PDU is assembled (or obtained or generated);
data volume on all logical channels in the logical channel group when the DSR MAC CE is transmitted; or
data volume on all logical channels in the logical channel group when the first symbol is transmitted in the PUSCH where the DSR MAC CE is transmitted.

In some embodiments, for an RLC layer, data volume related to remaining time of an RLC RDU may further include:
when data discarded by an upper layer are not yet included in an RLC data PDU, data volume related to remaining time of a service data unit in the RLC layer does not include the data discarded by the upper layer; and/or
when data discarded by an upper layer are already included in an RLC data PDU pending for initial transmission or retransmission, data volume related to remaining time of a service data unit in the RLC layer includes the data discarded by the upper layer.

According to the above embodiments, it is clarified how to determine the data volume related to the remaining time, that is, the data volume includes the data volume related to the remaining time of the PDCP layer and/or the RLC layer of the terminal equipment, thereby solving problems in the relevant art.

The embodiments of this disclosure further provide an information reception apparatus. FIG. 9 is a schematic diagram of an information reception apparatus of an embodiment of this disclosure. The information reception apparatus is created based on the same inventive concept as the information reception method in the embodiments of the second aspect of this disclosure, and their principles of solving problems are similar, hence, reference may be made to the implementation of the information reception method in the embodiments of the second aspect of this disclosure for implementation of the information reception apparatus, with repeated parts being not going to be described herein any further. The term "unit" or "module" used below refers to a combination of software and/or hardware that may achieve predetermined functions. Although the system described in the following embodiment is preferably implemented by software, implementation by hardware or a combination of software and hardware is also possible and envisioned.

As shown in FIG. 9, the information reception apparatus includes:
a receiving unit 901 configured to receive a delay status report transmitted by a terminal equipment, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

According to the above embodiments, the network device receives the delay status report transmitted by the terminal equipment, and may obtain the data volume information contained in the DSR, i.e. the data volume related to the remaining time of the service data unit in the PDCP layer (PDCP SDU) and/or the data volume related to the remaining time of the service data unit in the RLC layer (RLC SDU), so that the network device may learn accurate urgency of buffered data, and allocate appropriate uplink resources to transmit data with urgent delay, thereby ensuring that delay requirements of services are satisfied.

In some embodiments, data volume related to remaining time of a service data unit in a PDCP layer (PDCP SDU) and/or data volume related to remaining time of a service data unit in an RLC layer (RLC SDU) of the terminal equipment is/are as described in the embodiments of the first aspect, and shall not be repeated herein any further.

In some embodiments, data volume related to remaining time indicated by data volume information included in a DSR MAC CE of a MAC layer includes data volume (buffer status or amount of data) on all logical channels of a logical channel group, and the data volume related to the remaining time may include at least one of the following information:
(1) data volume on all logical channels in a logical channel group when a delay status report is triggered;
(2) data volume on all logical channels in the logical channel group when or after a DSR MAC CE is generated;
(3) data volume on all logical channels in the logical channel group when or after a DSR MAC PDU is assembled (or obtained or generated);
(4) data volume on all logical channels in the logical channel group when the DSR MAC CE is transmitted; or
(5) data volume on all logical channels in the logical channel group when a first symbol is transmitted in a PUSCH where the DSR MAC CE is transmitted.

In some embodiments, for an RLC layer, data volume related to remaining time of an RLC SDU may further include:
when data discarded by an upper layer (such as data discarded due to expiration of a discardTimer) are not yet included in an RLC data PDU, the data volume related to the remaining time of the service data unit in the RLC layer does not include the data discarded by the upper layer; and/or
when data discarded by an upper layer are already included in an RLC data PDU pending for initial transmission or retransmission, the data volume related to the remaining time of the service data unit in the RLC layer includes the data discarded by the upper layer.

In some embodiments, the apparatus further includes a configuring unit (not shown) configured to configure a first threshold and/or a second threshold for a terminal equipment, and notify the terminal equipment of a determined threshold. The first threshold and the second threshold are as described in the embodiments of first aspect, and shall not be repeated herein any further.

According to the above embodiments, the network device receives the delay status report transmitted by the terminal equipment, and may obtain the data volume information contained in the DSR, i.e. the data volume related to the remaining time of the service data unit in the PDCP layer (PDCP SDU) and/or the data volume related to the remaining time of the service data unit in the RLC layer (RLC SDU), so that the network device may learn accurate urgency of buffered data, and allocate appropriate uplink resources to transmit data with urgent delay, so as to ensure delay requirements of the services.

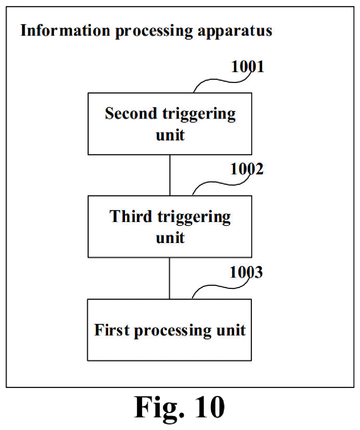

The embodiments of this disclosure further provide an information reception apparatus, applicable to a terminal equipment. FIG. 10 is a schematic diagram of an information processing apparatus of an embodiment of this disclosure. The information processing apparatus is created based on the same inventive concept as the information processing method in the embodiments of the third aspect of this disclosure, and their principles of solving problems are similar, hence, reference may be made to the implementation of the information processing method in the embodiments of the third aspect of this disclosure for implementation of the information processing apparatus, with repeated parts being not going to be described herein any further. The term "unit" or "module" used below refers to a combination of software and/or hardware that may achieve predetermined functions. Although the system described in the following embodiments is preferably implemented by software, implementation by hardware or a combination of software and hardware is also possible and envisioned.

As shown in FIG. 10, the information processing apparatus includes:
a second triggering unit 1001 configured to trigger a delay status report;
a third triggering unit 1002 configured to trigger a scheduling request; and
a first processing unit 1003 configured to cancel the scheduling request.

In some embodiments, the delay status report (DSR) triggered by the second triggering unit 1001 may be identical to or different from the delay status report (DSR) triggered in the embodiments of the first aspect of this disclosure, and this disclosure is not limited thereto.

In some embodiments, a process of triggering the scheduling request by the third triggering unit 1002 may be implemented with reference to the relevant art.

In some embodiments, the first processing unit 1003 cancels the scheduling request in at least one of the following situations where:
(1) a MAC PDU is transmitted and includes a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
(2) an uplink grant (UL grant) is able to accommodate all pending data to be transmitted;
(3) all triggered delay status reports are cancelled; or
(4) a delay status report triggering the scheduling request is cancelled.

In some embodiments, the event triggering a DSR in (1) triggers the DSR based on, for example, a threshold, and details are as described in the embodiments of the first aspect, which shall not be repeated herein any further; or, the event may also be other events triggering the DSR. The data volume of the event triggering the DSR may be the data volume described in the embodiments of the first aspect of this disclosure, or, it may be other amounts of data, which are not limited in this disclosure.

According to the above embodiments, it is clarified when the scheduling request (SR) triggered by the delay status report (DSR) is cancelled, which may reduce unnecessary SR transmission, save resources occupied by SR transmission, reduce UE power consumption and save electricity, thus solving the problems existing in the relevant art.

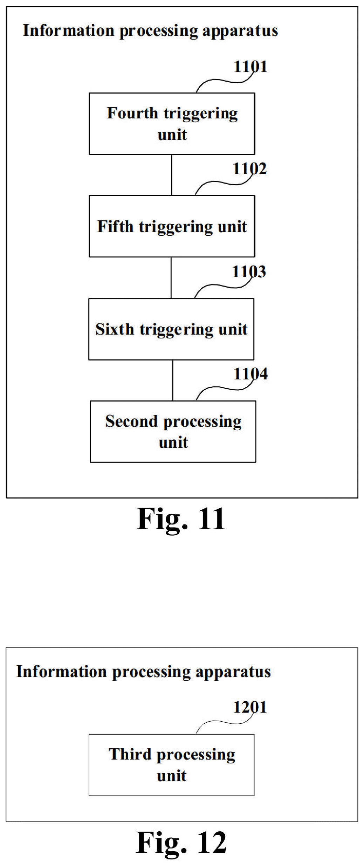

The embodiments of this disclosure further provide an information reception apparatus, applicable to a terminal equipment. FIG. 11 is a schematic diagram of an information processing apparatus of an embodiment of this disclosure. The information processing apparatus is created based on the same inventive concept as the information processing method in the embodiments of the fourth aspect of this disclosure, and their principles of solving problems are similar, hence, reference may be made to the implementation of the information processing method in the embodiments of the fourth aspect of this disclosure for implementation of the information processing apparatus, with repeated parts being not going to be described herein any further. The term "unit" or "module" used below refers to a combination of software and/or hardware that may achieve predetermined functions. Although the system described in the following embodiments is preferably implemented by software, implementation by hardware or a combination of software and hardware is also possible and envisioned.

As shown in FIG. 11, the method includes:
a fourth triggering unit 1101 configured to trigger a delay status report;
a fifth triggering unit 1102 configured to trigger a scheduling request;
a sixth triggering unit 1103 configured to initiate a random access procedure related to the scheduling request; and
a second processing unit 1104 configured to stop the random access procedure.

In some embodiments, the delay status report (DSR) triggered by the fourth triggering unit 1101 may be identical to or different from the delay status report (DSR) triggered in the embodiments of the first aspect of this disclosure, and this disclosure is not limited thereto.

In some embodiments, a process of triggering the scheduling request by the fifth triggering unit 1102 may include that the terminal equipment does not have available uplink resources to transmit the triggered DSR, or available uplink resources are unable to accommodate a DSR MAC CE plus its subheaders, or the available uplink resources are later than latency requirements of uplink services, etc. The terminal equipment may trigger the scheduling request, and transmit the scheduling request to the network device in a PUCCH, requesting the network device to transmit an UL grant to allocate uplink resources, so that the terminal equipment reports the delay status report via the uplink resources indicated by the UL grant.

In some embodiments, a process of initiating the random access procedure related to the scheduling request by the sixth triggering unit 1103 may be implemented with reference to an existing method for initiating a random access procedure.

In some embodiments, the second processing unit 1104 stops the random access procedure in at least one of the following situations where:
(1) a MAC PDU is transmitted and includes a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
(2) an uplink grant (UL grant) is able to accommodate all pending data to be transmitted;
(3) all triggered delay status reports are cancelled; or
(4) a delay status report triggering the scheduling request is cancelled.

In some embodiments, the event triggering a DSR in (1) triggers the DSR based on, for example, a threshold, and details are as described in the embodiments of the first aspect, which shall not be repeated herein any further; or, the event may also be other events triggering the DSR. The data volume of the event triggering the DSR may be the data volume described in the embodiments of the first aspect of this disclosure, or, it may be other amounts of data, which are not limited in this disclosure.

According to the above embodiments, it is clarified when the random access procedure related to the scheduling request (SR) triggered by the delay status report (DSR) is stopped, which may reduce unnecessary transmission of messages related to random access, save radio resources, and lower power consumption of UEs, thereby solving the problems in the relevant art.

The embodiments of this disclosure further provide an information reception apparatus, applicable to a terminal equipment. FIG. 12 is a schematic diagram of an information processing apparatus of an embodiment of this disclosure. The information processing apparatus is created based on the same inventive concept as the information processing method in the embodiments of the fifth aspect of this disclosure, and their principles of solving problems are similar, hence, reference may be made to the implementation of the information processing method in the embodiments of the fifth aspect of this disclosure for implementation of the information processing apparatus, with repeated parts being not going to be described herein any further. The term "unit" or "module" used below refers to a combination of software and/or hardware that may achieve predetermined functions. Although the system described in the following embodiment is preferably implemented by software, implementation by hardware or a combination of software and hardware is also possible and envisioned.

As shown in FIG. 12, the apparatus includes:
a third processing unit 1201 configured to generate a MAC PDU,
the MAC PDU including a delay status report (DSR) and/or a buffer status report (BSR).

In some embodiments, the delay status report (DSR) triggered by the third processing unit 1201 may be identical to or different from the triggered delay status report (DSR) in the embodiments of the first aspect of this disclosure, and this disclosure is not limited thereto.

In some embodiments, the DSR and BSR are unable to be included in the same MAC PDU, and at this case, the MAC PDU includes at most one of a delay status report (DSR) and a buffer status report (BSR).

In some embodiments, when both a delay status report (DSR) and a buffer status report (BSR) are triggered, whether the MAC PDU includes a DSR or a BSR is determined according to a priority of the DSR and a priority of the BSR, such as including the DSR or the BSR whichever having a higher priority in the MAC PDU. The priority of the DSR and the priority of the BSR may be configured or defined in advance. For example, in a case where the priority of the DSR and the priority of the BSR are predefined, the priority of the delay status report (DSR) is higher than that of a regular BSR or a periodic BSR or a padding BSR; or, the priority of the delay status report (DSR) is lower than that of a regular BSR and higher than that of a periodic BSR or padding BSR. For another example, when the priority of the DSR and the priority of the BSR are configured by the network device, network signaling may indicate the priority of the DSR and the priority of the BSR, or indicate that the priority of the DSR is higher than the priority of the BSR, or indicate that the priority of the BSR is higher than the priority of the DSR, in an RRC message, and so on.

Thus, repeated reporting of data volume information (buffer size or amount of data) may be reduced, and utilization of radio resources may be improved.

In some embodiments, the DSR and the BSR may be included in the same MAC PDU. At this case, the MAC PDU may simultaneously include the delay status report (DSR) and the buffer status report (BSR). For example, when both the delay status report (DSR) and the buffer status report (BSR) are triggered, the DSR and the BSR are included in the same MAC PDU. Thus, a process of BSR and a process of DSR may be performed independently without affecting each other, thereby making implementations simple.

### Embodiments of a seventh aspect

The embodiments of this disclosure provide a communication system, and reference may be made to FIG. 1, with contents identical to those in the embodiments of the first to the fifth aspects being not going to be described herein any further.

In some embodiments, the communication system 100 may at least include a network device 101 and/or a terminal equipment 102, wherein the terminal equipment 102 triggers a delay status report, and transmits the delay status report to the network device 102, and the network device 102 receives the delay status report transmitted by the terminal equipment 102. The delay status report includes data volume information, the data volume information including data volume related to remaining time of a service data unit in a PDCP layer (PDCP SDU) and/or data volume related to remaining time of a service data unit in an RLC layer (RLC SDU) of the terminal equipment.

In some embodiments, reference may be made to the embodiments of the first and second aspects for an implementation of the delay status report, which shall not be described herein any further.

The embodiments of this disclosure further provide a network device, which may be, for example, a base station. However, this disclosure is not limited thereto, and it may also be another network device.

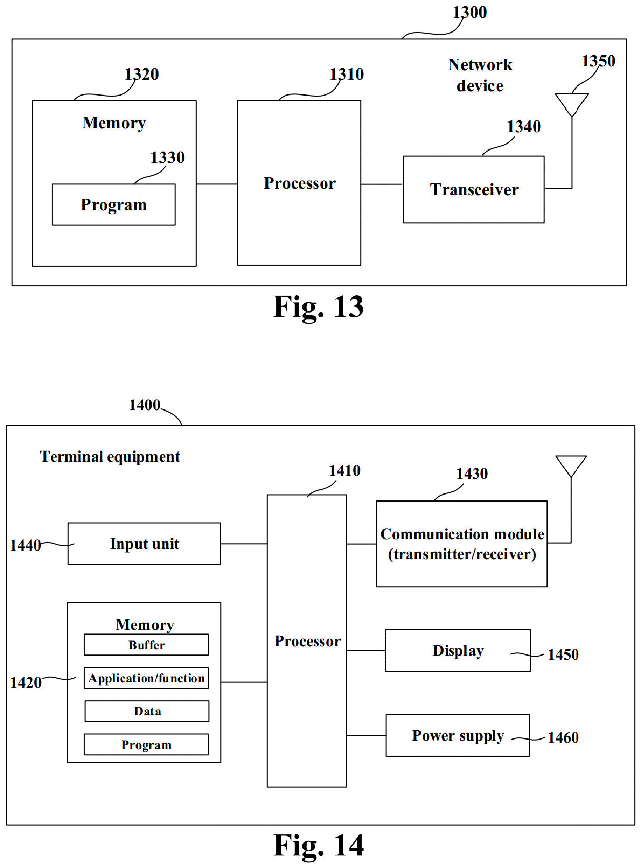

FIG. 13 is a schematic diagram of a structure of a network device of an embodiment of this disclosure. As shown in FIG. 13, the network device 1300 may include a processor 1310 (such as a central processing unit (CPU)) and a memory 1320, the memory 1320 being coupled to the processor 1310. The memory 1320 may store various data, and furthermore, it may store a program 1330 for information processing, and execute the program 1330 under control of the processor 1310.

For example, the processor 1310 may be configured to execute a program to carry out the information reception method in the embodiments of the second aspect. For example, the processor 1310 may be configured to execute the following control: receiving a delay status report transmitted by a terminal equipment, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

Furthermore, as shown in FIG. 13, the network device 1300 may include a transceiver 1340, and an antenna 1350, etc. Functions of the above components are similar to those in the relevant art, and shall not be described herein any further. It should be noted that the network device 1300 does not necessarily include all the parts shown in FIG. 13, and furthermore, the network device 1300 may include parts not shown in FIG. 13, and the relevant art may be referred to.

The embodiments of this disclosure further provide a terminal equipment; however, this disclosure is not limited thereto, and it may also be another equipment.

FIG. 14 is a schematic diagram of a terminal equipment of an embodiment of this disclosure. As shown in FIG. 14, the terminal equipment may include a processor 1410 and a memory 1420, the memory 1420 storing data and a program and being coupled to the processor 1410. It should be noted that this figure is illustrative only, and other types of structures may also be used, so as to supplement or replace this structure and achieve a telecommunications function or other functions.

For example, the processor 1410 may be configured to execute a program to carry out the information transmission method in the embodiments of the first aspect. For example, the processor 1410 may be configured to execute the following control: triggering a delay status report (DSR); and transmitting the delay status report to a network device, the delay status report including data volume information, the data volume information including data volume related to remaining time of a service data unit in a PDCP layer (PDCP SDU) and/or data volume related to remaining time of a service data unit in an RLC layer (RLC SDU) of the terminal equipment.

As shown in FIG. 14, the terminal equipment 1400 may further include a communication module 1430, an input unit 1440, a display 1450, and a power supply 1460; wherein functions of the above components are similar to those in the relevant art, which shall not be described herein any further. It should be noted that the terminal equipment 1400 does not necessarily include all the parts shown in FIG. 14, and the above components are not necessary. Furthermore, the terminal equipment 1400 may include parts not shown in FIG. 14, and the relevant art may be referred to.

An embodiment of this disclosure provides a computer program, which, when executed in a terminal equipment, will cause the terminal equipment to carry out the information transmission method as described in the embodiments of the first aspect.

An embodiment of this disclosure provides a computer storage medium, including a computer program, which will cause a terminal equipment to carry out the information transmission method as described in the embodiments of the first aspect.

An embodiment of this disclosure provides a computer program, which, when executed in a network device, will cause the network device to carry out the information reception method as described in the embodiments of the second aspect.

An embodiment of this disclosure provides a computer storage medium, including a computer program, which will cause a network device to carry out the information reception method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. An information processing method, applicable to a terminal equipment, wherein the method includes:
   triggering a delay status report;
   triggering a scheduling request;
   initiating a random access procedure related to the scheduling request; and
   stopping the random access procedure.
2. The method according to supplement 1, wherein the random access procedure is stopped in at least one of the following situations where:
   a MAC PDU is transmitted and includes a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
   a UL grant is able to accommodate all pending data to be transmitted;
   all triggered delay status reports are cancelled; or
   a delay status report triggering the scheduling request is cancelled.
3. An information processing method, applicable to a terminal equipment, wherein the method includes:
   generating a MAC PDU,
   the MAC PDU including a delay status report (DSR) and/or a buffer status report.
4. The method according to supplement 3, wherein the MAC PDU includes one of a delay status report (DSR) and/or a buffer status report (BSR).
5. The method according to supplement 4, wherein when both a delay status report (DSR) and a buffer status report (BSR) are triggered,
   a priority of the delay status report (DSR) is higher than that of a regular BSR or a periodic BSR or a padding BSR; or,
   the priority of the delay status report (DSR) is lower than that of the regular BSR and higher than that of a periodic BSR or padding BSR.

## Claims

1. An information transmission apparatus, applicable to a terminal equipment, wherein the apparatus comprises:
a first triggering unit configured to trigger a delay status report; and
a transmitting unit configured to transmit the delay status report to a network device, the delay status report comprising data volume information, the data volume information comprising data volume related to remaining time of a service data unit in a PDCP layer (PDCP SDU) and/or data volume related to remaining time of a service data unit in an RLC layer (RLC SDU) of the terminal equipment.

2. The apparatus according to claim 1, wherein for the RLC layer, the remaining time of the service data unit is indicated by an upper layer.

3. The apparatus according to claim 1, wherein the data volume related to the remaining time of the service data unit comprises: data volume of the service data unit when the remaining time of the service data unit satisfies a preset condition.

4. The apparatus according to claim 3, wherein the preset condition comprises that: the remaining time of the service data unit is less than or equal to a first threshold; or
the remaining time of the service data unit is greater than or equal to a first threshold; or
the remaining time of the service data unit is between the first threshold and a second threshold.

5. The apparatus according to claim 3, wherein the first threshold and/or the second threshold are/is predefined or are/is configured by a network.

6. The apparatus according to claim 3, wherein the data volume related to the remaining time of the service data unit comprises: data volume related to remaining time of the service data unit when a delay status report is triggered.

7. The apparatus according to claim 6, wherein the first threshold is a threshold for triggering a DSR by a logical channel group (LCG) configured by a network.

8. The apparatus according to claim 3, wherein the data volume related to the remaining time of the service data unit comprises: data volume related to remaining time of the service data unit when a delay status report (DSR) MAC CE is generated.

9. The apparatus according to claim 8, wherein the first threshold is a value of remaining time when a DSR MAC CE is generated, or is a difference between a threshold for triggering a DSR by a logical channel group (LCG) configured by a network and a difference between a time when a DSR is triggered and a time when a DSR MAC CE is generated.

10. The apparatus according to claim 8, wherein,
for the PDCP layer, a MAC layer notifies the PDCP layer of an absolute time when a DSR MAC CE is generated, or an absolute time when a MAC PDU containing a DSR MAC CE is assembled, or a difference between a time when a DSR is triggered and a time when a DSR MAC CE is generated, or a difference between a time when a DSR is triggered and a time when a MAC PDU is assembled; and/or
for the RLC layer, a MAC layer and/or the PDCP layer notify/notifies the RLC layer of an absolute time when a DSR MAC CE is generated, or an absolute time when a MAC PDU containing a DSR MAC CE is assembled, or a difference between a time when a DSR is triggered and a time when a DSR MAC CE is generated, or a difference between a time when a DSR is triggered and a time when a MAC PDU is assembled.

11. The apparatus according to claim 2, wherein the data volume related to the remaining time of the service data unit comprises data volume related to remaining time of the service data unit when a DSR MAC CE is transmitted.

12. The apparatus according to claim 11, wherein the first threshold is a value of remaining time when a DSR MAC CE is transmitted, or a value of remaining time when a DSR MAC CE is reported, or a value of remaining time when a first symbol is transmitted in a PUSCH where a DSR MAC CE is transmitted, or a difference between a threshold for triggering a DSR by a logical channel group configured by a network and a difference between a time when a DSR is triggered and a time when a DSR MAC CE is transmitted, or a difference between a threshold for triggering a DSR by a logical channel group configured by a network and a difference between a time when a DSR is triggered and a time when a DSR MAC CE is reported, or a difference between a threshold for triggering a DSR by a logical channel group configured by a network and a difference between a time when a DSR is triggered and a time when a first symbol is transmitted in a PUSCH where a DSR MAC CE is transmitted.

13. The apparatus according to claim 12, wherein,
for the PDCP layer, a MAC layer notifies the PDCP layer of at least one of the following information:
an absolute time when a DSR MAC CE is transmitted, or an absolute time when a DSR MAC CE is reported, or an absolute time when a first symbol is transmitted in a PUSCH where a DSR MAC CE is transmitted, or a difference between a time when a DSR is triggered and a time when a DSR MAC CE is transmitted, or a difference between a time when a DSR is triggered and a time when a DSR MAC CE is reported, or a difference between a time when a DSR is triggered and a time when a first symbol is transmitted in a PUSCH where a DSR MAC CE is transmitted; and/or
for the RLC layer, a MAC layer and/or the PDCP layer notify/notifies the RLC layer of at least one of the following information:
an absolute time when a DSR MAC CE is transmitted, or an absolute time when a DSR MAC CE is reported, or an absolute time when a first symbol is transmitted in a PUSCH where a DSR MAC CE is transmitted, or a difference between a time when a DSR is triggered and a time when a DSR MAC CE is transmitted, or a difference between a time when a DSR is triggered and a time when a DSR MAC CE is reported, or a difference between a time when a DSR is triggered and a time when a DSR MAC CE is reported, or a difference between a time when a DSR is triggered and a time when a first symbol is transmitted in a PUSCH where a DSR MAC CE is transmitted.

14. The apparatus according to claim 4, wherein the second threshold is a lower limit of a value range to which an index of remaining time of a service data unit corresponds.

15. The apparatus according to claim 2, wherein the number of first threshold is at least one, and the number of the data volume information is also at least one.

16. The apparatus according to claim 1, wherein the data volume information included in a DSR MAC CE of a MAC layer is used to indicate at least one of the following information:
data volume on all logical channels in a logical channel group when a delay status report is triggered;
data volume on all logical channels in a logical channel group when or after a DSR MAC CE is generated;
data volume on all logical channels in a logical channel group when or after a DSR MAC PDU is assembled;
data volume on all logical channels in a logical channel group when a DSR MAC CE is transmitted; or
data volume on all logical channels in a logical channel group when a first symbol is transmitted in a PUSCH where a DSR MAC CE is transmitted.

17. The apparatus according to claim 1, wherein for an RLC layer, when data discarded by an upper layer are not yet included in an RLC data PDU, data volume related to remaining time of the service data unit in the RLC layer does not include the data discarded by the upper layer; and/or
when data discarded by an upper layer are already included in an RLC data PDU pending for initial transmission or retransmission, data volume related to remaining time of the service data unit in the RLC layer includes the data discarded by the upper layer.

18. An information reception apparatus, applicable to a network device, wherein the apparatus comprises:
a receiving unit configured to receive a delay status report transmitted by a terminal equipment, the delay status report comprising data volume information, the data volume information comprising data volume related to remaining time of a service data unit in a PDCP layer (PDCP SDU) and/or data volume related to remaining time of a service data unit in an RLC layer (RLC SDU) of the terminal equipment.

19. An information processing apparatus, applicable to a terminal equipment, wherein the apparatus comprises:
a second triggering unit configured to trigger a delay status report;
a third triggering unit configured to trigger a scheduling request; and
a first processing unit configured to cancel the scheduling request.

20. The apparatus according to claim 19, wherein the scheduling request is canceled in at least one of the following situations where:
a MAC PDU is transmitted and comprises a DSR MAC CE, the DSR MAC CE containing data volume and/or remaining time of a latest event triggering a DSR until the MAC PDU is assembled, or data volume and/or remaining time of a latest event triggering a DSR when the MAC PDU is assembled;
a UL grant is able to accommodate all pending data to be transmitted;
all triggered delay status reports are cancelled; or
a delay status report triggering the scheduling request is cancelled.
